# EUROPEAN PATENT APPLICATION

(11) **EP 4 742 718 A1**
(43) Date of publication of application: **13.05.2026**
(21) Application number: 23944046.4
(22) Date of filing: 05.07.2023
(51) Int. Cl.: H04W 12/033

(54) **DATA TRANSMISSION METHOD, ACCESS POINT DEVICE, STATION DEVICE, AND COMMUNICATION SYSTEM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/105968
(87) International publication number: WO 2025/007315

(57) **Abstract**

Embodiments of the present disclosure relate to a data transmission method, an access point device, a station device, and a communication system. The data transmission method comprises: determining a first radio frame, the first radio frame indicating time information, and the time information identifying extra time information required by a receiving device of the first radio frame to decrypt the first radio frame; and sending the first radio frame. In this way, the receiving device that receives the first radio frame can reserve a duration corresponding to the extra time information and decrypt the first radio frame, improving the transmission security of the first radio frame and making it so that the receiving device is unable to respond to function information of the first radio frame itself.

## Description

### FIELD

The present disclosure relates to the field of communication technologies, and more particularly to a data transmission method, an access point device, a station device and a communication system.

### BACKGROUND

At present, the research contents of Wi-Fi technology, such as ultra-high reliability (UHR), are aimed at improving the reliability of wireless local area network (WLAN) connection, reducing delay, improving manageability, increasing throughput at different signal to noise ratio (SNR) levels and reducing device-level power consumption. However, according to the research in related technologies, it is necessary to improve the transmission security of data frames.

### SUMMARY

Embodiments of the present disclosure provide a data transmission method, an access point device, a station device and a communication system, so as to provide a mechanism for improving the security of data transmission.

Embodiments of a first aspect of the present disclosure provide a data transmission method, which includes: determining a first radio frame, where the first radio frame indicates time information, and the time information identifies additional time information required by a receiving device of the first radio frame to decrypt the first radio frame; and sending the first radio frame.

Embodiments of a second aspect of the present disclosure provide a data transmission method, which includes: receiving a first radio frame, where the first radio frame indicates time information, and the time information identifies additional time information required by a receiving device of the first radio frame to decrypt the first radio frame.

Embodiments of a third aspect of the present disclosure provide an access point device, which includes: a radio frame determining module configured to determine a first radio frame, where the first radio frame indicates time information, and the time information identifies additional time information required by a receiving device of the first radio frame to decrypt the first radio frame; and a radio frame sending module configured to send the first radio frame.

Embodiments of a fourth aspect of the present disclosure provide a station device, which includes: a radio frame receiving module configured to receive a first radio frame, where the first radio frame indicates time information, and the time information identifies additional time information required by a receiving device of the first radio frame to decrypt the first radio frame.

Embodiments of a fifth aspect of the present disclosure provide an access point device, which includes: one or more processors. The access point device is configured to perform the data transmission method according to optional embodiments of the first aspect.

Embodiments of a sixth aspect of the present disclosure provide a station device, which includes: one or more processors. The station device is configured to perform the data transmission method according to optional embodiments of the second aspect.

Embodiments of a seventh aspect of the present disclosure provide a communication system, which includes an access point device and a station device. The access point device is configured to perform the data transmission method according to the first aspect, and the station device is configured to perform the data transmission method according to optional embodiments of the second aspect.

Embodiments of an eighth aspect of the present disclosure provide a storage medium, storing instructions which, when executed on a communication device, cause the communication device to perform the data transmission method according to optional embodiments of the first aspect or the second aspect.

Additional aspect and advantages of the embodiments of the present disclosure will be set forth in part in the description which follows, and will be obvious from the description which follows, or may be learned by practice of the present disclosure. It is to be understood that both the foregoing general description and the following detailed description are illustrative and explanatory only and are not restrictive of the present disclosure.

### BRIEF DESCRIPTION OF THE DRAWINGS

In order to more clearly explain the technical scheme in the embodiments of the present disclosure, the following drawings are introduced, which are only some embodiments of the present disclosure and do not specifically limit the protection scope of the present disclosure.
Fig. 1 is a schematic architecture diagram of a communication system according to an embodiment of the present disclosure.
Fig. 2 is a schematic interaction diagram of a communication method according to an embodiment of the present disclosure.
Fig. 3 is a schematic flowchart of a communication method according to an embodiment of the present disclosure.
Fig. 4 is another schematic flowchart of a communication method according to an embodiment of the present disclosure.
Fig. 5 is another schematic interaction diagram of a communication method according to an embodiment of the present disclosure.
Fig. 6 is a schematic block diagram of a communication method according to an embodiment of the present disclosure.
Fig. 7 is another schematic block diagram of a communication method according to an embodiment of the present disclosure.
Fig. 8 is still another schematic block diagram of a communication method according to an embodiment of the present disclosure.
Fig. 9 is yet another schematic block diagram of a communication method according to an embodiment of the present disclosure.

### DETAILED DESCRIPTION

Embodiments of the present disclosure provide a data transmission method, an access point device, a station device and a communication system.

In a first aspect, embodiments of the present disclosure propose a data transmission method, which includes: determining a first radio frame, where the first radio frame indicates time information, and the time information identifies additional time information required by a receiving device of the first radio frame to decrypt the first radio frame; and sending the first radio frame.

In the above embodiments, the first radio frame is determined, the time information is indicated by the first radio frame, the time information identifies the additional time information required by the receiving device of the first radio frame to decrypt the first radio frame, and the first radio frame is sent. In this way, the receiving device that receives the first radio frame may reserve an additional duration corresponding to the additional time information, decrypt the first radio frame, improve the transmission security of sensitive information (for example, sequence number (SN) information) in the first radio frame, and avoid leaking or tampering with the sensitive information in the first radio frame during data transmission of the first radio frame, which otherwise disables the receiving device to respond to the functional information of the first radio frame itself.

In combination with some embodiments of the first aspect, in some embodiments, the time information includes: time information reported by the receiving device; or time information having a longest corresponding duration among time information reported by a plurality of the receiving devices.

In the above embodiments, the time information in the first radio frame may be determined in combination with different abilities of different receiving devices to decrypt the first radio frame, so as to ensure that each receiving device may reserve the additional duration required to decrypt the first radio frame after receiving the first radio frame, and decrypt the first radio frame, thus realizing the successful decryption of the first radio frame.

In combination with some embodiments of the first aspect, in some embodiments, the first radio frame includes a first duration identification bit, the first duration identification bit identifies an additional duration required by the receiving device to decrypt the first radio frame, and the additional duration includes: the additional duration required by the receiving device to decrypt the first radio frame; or a longest additional duration among the additional durations required by a plurality of the receiving devices to decrypt the first radio frame.

In the above embodiments, the specific duration value of the time information in the first radio frame may be determined according to the additional duration required by the receiving device to decrypt the first radio frame in combination with different abilities of different receiving devices to decrypt the first radio frame, so as to ensure that each receiving device may reserve the additional duration required to decrypt the first radio frame after receiving the first radio frame, and decrypt the first radio frame, thus realizing the successful decryption of the first radio frame.

In combination with some embodiments of the first aspect, in some embodiments, before determining the first radio frame, the above method may further include: receiving a second radio frame sent by the receiving device, where the second radio frame indicates first capability information of the receiving device, and the first capability information indicates the additional time information required by the receiving device to decrypt the first radio frame.

In the above embodiments, the receiving device reports the duration required by itself to decrypt the encrypted data frame. When the first radio frame is sent to the receiving device, the corresponding additional time information is set in the first radio frame, so that the receiving device reserves the additional duration corresponding to the additional time information, and decrypts the first radio frame within the additional duration, thus realizing the safe transmission of the first radio frame without affecting the functional information of the first radio frame itself.

In combination with some embodiments of the first aspect, in some embodiments, the second radio frame includes an ultra-high reliability (UHR) capability information element, and the UHR capability information element includes a first capability identification bit and a second duration identification bit; the first capability identification bit identifies whether the receiving device supports a first capability, and the first capability includes decrypting the first radio frame; and the second duration identification bit identifies an additional duration required by the receiving device to decrypt the first radio frame.

In the above embodiments, the UHR capability information element of the second radio frame carries the first capability identification bit and the second duration identification bit, and the first capability identification bit identifies whether the receiving device supports the decryption of the first radio frame, and the second duration identification bit identifies the additional duration required by the receiving device to decrypt the first radio frame, thus accurately indicating the duration required by the receiving device to decrypt the first radio frame. In addition, by identifying whether the first capability is supported and the specific additional duration in the second radio frame in a representation form of identification bit, the amount of transmission data required in the transmission process of the second radio frame may be reduced.

In combination with some embodiments of the first aspect, in some embodiments, in a case that the first capability identification bit is set to a first parameter value, it is indicated that the receiving device supports the first capability.

In the above embodiments, since the second radio frame includes the first capability identification bit and it is indicated that the receiving device supports the first capability when the first capability identification bit is set to the first parameter value, it is possible to accurately know whether the receiving device supports the first capability. Moreover, in the second radio frame, it is identified whether the first capability is supported in a representation form of identification bit, the amount of transmission data required in the transmission process of the second radio frame may be reduced.

In combination with some embodiments of the first aspect, in some embodiments, the second duration identification bit is carried in a medium access control (MAC) capability field of the UHR capability information element; and the second duration identification bit is set to different parameter values, to indicate that different additional durations are required by the receiving device to decrypt the first radio frame.

In the above embodiments, the MAC capability field is provided in the UHR capability information element of the second radio frame, and the second duration identification bit is provided in the MAC capability field. By setting the second duration identification bit to different parameter values to indicate the additional duration required by the receiving device to decrypt the first radio frame, the additional duration required by the receiving device to decrypt the first radio frame may be indicated accurately. Moreover, by identifying the specific additional duration in a representation form of identification bit, the amount of transmission data required in the transmission process of the second radio frame may be reduced.

In combination with some embodiments of the first aspect, in some embodiments, the first capability information is multi-link device (MLD) level information in a case that the receiving device is affiliated to a multi-link device.

In the above embodiments, in a case that the receiving device is affiliated to the multi-link device, the first capability information is the MLD level information, and may simultaneously identify the first capability information corresponding to each receiving device affiliated to the same multi-link device.

In combination with some embodiments of the first aspect, in some embodiments, determining the first radio frame may include: appending the time information after a frame check sequence (FCS) field of a unicast control frame to obtain the first radio frame, in a case that the first radio frame is the unicast control frame; and appending the time information after a common information (common info) field of a broadcast control frame to obtain the first radio frame, in a case that the first radio frame is the broadcast control frame.

In the above embodiments, the first radio frame is obtained by appending the time information at a tail of a control frame, and the time information may be provided without affecting the functional information of the control frame itself, thus ensuring that each receiving device may reserve the additional time information required to decrypt the first radio frame after receiving the first radio frame. Moreover, it is also convenient to extract the time information from the first radio frame according to the position information of the time information in the first radio frame, and then parse the fields except the time information in the first radio frame within the additional duration reserved according to the time information, so as to correctly respond to the first radio frame.

In combination with some embodiments of the first aspect, in some embodiments, the first radio frame is the unicast control frame in case of one receiving device; and the first radio frame is the broadcast control frame in case of at least two receiving devices.

In the above embodiments, the sending mode and format of the first radio frame may be selected according to the number of the receiving devices, so as to send the first radio frame timely.

In combination with some embodiments of the first aspect, in some embodiments, the time information is not indicated in the first radio frame in a case that the first radio frame carries at least one of high efficiency (HE) information, extremely high throughput (EHT) information or UHR information.

In the above embodiments, in a case that the first radio frame carries at least one of the HE information, the EHT information or the UHR information, the time information is not appended to the first radio frame, thus reducing the amount of transmission data required in the data transmission process.

In combination with some embodiments of the first aspect, in some embodiments, sending the first radio frame may include: sending the first radio frame and instructing the receiving device to decrypt the first radio frame according to the additional time information.

In the above embodiments, the first radio frame is sent to the receiving device, and the receiving device is instructed to reserve the additional duration indicated by the additional time information according to the additional time information required by the receiving device to decrypt the first radio frame, and decrypt the first radio frame within the additional duration, thus improving the transmission security of sensitive information in the first radio frame without affecting the functional information of the first radio frame itself.

In a second aspect, embodiments of the present disclosure provide a data transmission method, which includes: receiving a first radio frame, where the first radio frame indicates time information, and the time information identifies additional time information required by a receiving device of the first radio frame to decrypt the first radio frame.

In the above embodiment, the received first radio frame carries the time information, and the time information identifies the additional time information required by the receiving device of the first radio frame to decrypt the first radio frame. In this way, the receiving device that receives the first radio frame may reserve a duration corresponding to the additional time information, decrypt the first radio frame, improve the transmission security of sensitive information (for example, sequence number (SN) information) in the first radio frame, and avoid leaking or tampering with the sensitive information in the first radio frame during data transmission of the first radio frame, which otherwise disables the receiving device to respond to the functional information of the first radio frame itself (e.g., preparatory reception status information of the first radio frame).

In combination with some embodiments of the second aspect, in some embodiments, the time information includes: time information reported by the receiving device; or time information having a longest corresponding duration among time information reported by a plurality of the receiving devices.

In combination with some embodiments of the second aspect, the first radio frame includes a first duration identification bit, and the first duration identification bit identifies an additional duration required by the receiving device to decrypt the first radio frame. The additional duration includes: the additional duration required by the receiving device to decrypt the first radio frame; or a longest additional duration among the additional durations required by a plurality of the receiving devices to decrypt the first radio frame.

In combination with some embodiments of the second aspect, in some embodiments, before receiving the first radio frame, the above method may further include: determining a second radio frame, where the second radio frame indicates first capability information, and the first capability information indicates the additional time information required to decrypt the first radio frame; and sending the second radio frame.

In combination with some embodiments of the second aspect, in some embodiments, the second radio frame includes an ultra-high reliability (UHR) capability information element, and the UHR capability information element includes a first capability identification bit and a second duration identification bit; the first capability identification bit identifies whether the receiving device supports a first capability, and the first capability includes decrypting the first radio frame; and the second duration identification bit identifies an additional duration required by the receiving device to decrypt the first radio frame.

In combination with some embodiments of the second aspect, in some embodiments, in a case that the first capability identification bit is set to a first parameter value, it is indicated that the receiving device supports the first capability.

In combination with some embodiments of the second aspect, in some embodiments, the second duration identification bit is carried in a medium access control (MAC) capability field of the UHR capability information element; and the second duration identification bit is set to different parameter values, to indicate that different additional durations are required by the receiving device to decrypt the first radio frame.

In combination with some embodiments of the second aspect, in some embodiments, the first capability information is multi-link device (MLD) level information in a case that the receiving device is affiliated to a multi-link device.

In combination with some embodiments of the second aspect, in some embodiments, determining the first radio frame may include: appending the time information after a frame check sequence (FCS) field of a unicast control frame to obtain the first radio frame, in a case that the first radio frame is the unicast control frame; and appending the time information after a common information (common info) field of a broadcast control frame to obtain the first radio frame, in a case that the first radio frame is the broadcast control frame.

In combination with some embodiments of the second aspect, in some embodiments, the first radio frame is the unicast control frame in case of one receiving device; and the first radio frame is the broadcast control frame in case of at least two receiving devices.

In combination with some embodiments of the second aspect, in some embodiments, the time information is not indicated in the first radio frame in a case that the first radio frame carries at least one of high efficiency (HE) information, extremely high throughput (EHT) information or UHR information.

In combination with some embodiments of the second aspect, in some embodiments, the above method may further include: decrypting the first radio frame according to the additional time information.

In the above embodiments, after the receiving device receives the first radio frame, the receiving device decrypts the first radio frame according to the additional time information required by the receiving device to decrypt the first radio frame, thus improving the transmission security of sensitive information in the first radio frame without affecting the functional information of the first radio frame itself.

In this way, the receiving device reports the duration required by itself to decrypt the first radio frame, and when the first radio frame is sent to the receiving device, the corresponding additional time information is provided in the first radio frame, so that the receiving device may reserve the additional duration corresponding to the additional time information after receiving the first radio frame, and decrypt the first radio frame within the additional duration, thus realizing safe transmission of the first radio frame without affecting the functional information of the first radio frame itself.

In a third aspect, embodiments of the present disclosure propose an access point device, which includes: a radio frame determining module configured to determine a first radio frame, where the first radio frame indicates time information, and the time information identifies additional time information required by a receiving device of the first radio frame to decrypt the first radio frame; and a radio frame sending module configured to send the first radio frame.

In a fourth aspect, embodiments of the present disclosure propose a station device, which includes: a radio frame receiving module configured to receive a first radio frame, where the first radio frame indicates time information, and the time information identifies additional time information required by a receiving device of the first radio frame to decrypt the first radio frame.

In a fifth aspect, embodiments of the present disclosure propose an access point device, which includes: one or more processors. The access point device is configured to perform the data transmission method according to optional embodiments of the first aspect.

In a sixth aspect, embodiments of the present disclosure propose a station device, which includes: one or more processors. The station device is configured to perform the data transmission method according to optional embodiments of the second aspect.

In a seventh aspect, embodiments of the present disclosure propose a communication system, which includes an access point device and a station device. The access point device is configured to perform the data transmission method according to the first aspect, and the station device is configured to perform the data transmission method according to optional embodiments of the second aspect.

In an eighth aspect, embodiments of the present disclosure propose a storage medium, storing instructions which, when executed on a communication device, cause the communication device to perform the data transmission method according to optional embodiments of the first aspect or the second aspect.

In a ninth aspect, embodiments of the present disclosure propose a program product which, when executed by a communication device, causes the communication device to perform the data transmission method according to optional embodiments of the first aspect or the second aspect.

In a tenth aspect, embodiments of the present disclosure propose a computer program which, when run on a computer, causes the computer to perform the data transmission method according to optional embodiments of the first aspect or the second aspect.

An eleventh aspect, embodiments of the present disclosure provide a chip or a chip system, which includes a processing circuit, and is configured to perform the data transmission method according to optional embodiments of the first aspect or the second aspect.

It may be understood that the access point device, the station device, the communication system, the storage medium, the program product, the computer program, the chip or the chip system are all used to perform the methods proposed by the embodiments of the present disclosure. Therefore, the beneficial effects they may achieve may refer to the beneficial effects of the corresponding methods, and will not be repeated here.

The embodiments of the present disclosure provide a data transmission method, an access point device and a station device, so as to further improve the data transmission mechanism and improve the transmission security of data frames.

The method and the device are based on the same application concept. Since the principles of solving problems of the method and the device are similar, the implementations of the device and the method may be referred to each other, and the repetition is not repeated here.

In some embodiments, terms such as data transmission method, information processing method and communication method may be used interchangeably, terms such as access point device, information processing device and communication device may be used interchangeably, terms such as station device, information processing device and communication device may be used interchangeably, and terms such as information processing system and communication system may be used interchangeably.

The embodiments of the present disclosure are not exhaustive, but only schematic illustrations of some embodiments, and are not taken as specific limitations on the protection scope of the present disclosure. Without contradiction, each step in an embodiment may be implemented as an independent embodiment, and various steps may be arbitrarily combined. For example, the scheme after removing some steps in an embodiment may also be implemented as an independent embodiment, and the orders of various steps in an embodiment may be arbitrarily exchanged. In addition, optional implementations in an embodiment may be arbitrarily combined. In addition, various embodiments may be arbitrarily combined, for example, some or all steps of different embodiments may be arbitrarily combined, and an embodiment may be arbitrarily combined with optional implementations of another embodiment.

In the embodiments of the present disclosure, unless there are special explanations and logical conflicts, the terms and/or descriptions among the embodiments are consistent and may be quoted from each other, and the technical features in different embodiments may be combined to form a new embodiment according to their inherent logical relations.

The terms used in the embodiments of the present disclosure are only for the purpose of describing specific embodiments, and are not used as limitations on the present disclosure.

In the embodiments of the present disclosure, unless otherwise stated, elements expressed in a singular form, such as "a", "an", "the", "said", "foregoing", "aforementioned", "preceding", "this", etc., may refer to "one and only one" or "one or more", "at least one", etc. For example, when an article such as "a", "an", or "the" is used in translation, the noun following the article may be understood as a singular expression or a plural expression.

In the embodiments of the present disclosure, "a/the plurality of" refers to two or more.

In some embodiments, terms such as "at least one of", "one or more", "a plurality of", "multiple", etc., may be used interchangeably.

In some embodiments, expressions such as "at least one of A and B", "A and/or B", "in a case, A, and in another case, B", "in response to a case, A, and in response to another case, B", etc., may include the following technical solutions depending on the situation: in some embodiments, A (performing A independently of B); in some embodiments, B (performing B independently of A); in some embodiments, selecting to perform A or B (performing A and B selectively); in some embodiments, both A and B (performing both A and B). When there are more branches such as A, B, C, etc., the above similarly applies.

In some embodiments, expressions such as "A or B" may include the following technical solutions depending on the situation: in some embodiments, A (performing A independently of B); in some embodiments, B (performing B independently of A); in some embodiments, selecting to perform A or B (performing A and B selectively). When there are more branches such as A, B, C, etc., the above similarly applies.

Prefix terms such as "first", "second", etc., in the embodiments of the present disclosure are only used to distinguish different described objects, and do not limit the position, order, priority, quantity, or content of the described objects. The description of the objects refers to the context of the claims or embodiments, and should not be construed as redundant limitations due to the use of the prefix terms. For example, if the described object is a "field", the ordinal numbers before "field" in a "first field" and a "second field" do not limit the position or order of the "fields", and "first" and "second" do not limit whether the "fields" they modify are in the same message, nor do they limit the sequence of the "first field" and the "second field". For another example, if the described object is a "level", the ordinal numbers before "level" in a "first level" and a "second level" do not limit the priority between the "levels". For another example, the quantity of the described objects is not limited by the ordinal numbers and may be one or more. Taking a "first device" as an example, the quantity of the "device" may be one or more. In addition, objects modified by different prefix terms may be the same or different. For example, if the described object is a "device", a "first device" and a "second device" may be the same device or different devices, and their types may be the same or different. For another example, if the described object is "information", "first information" and "second information" may be the same information or different information, and their content may be the same or different.

In some embodiments, "comprising A", "including A", "indicating A", and "carrying A" may be interpreted as directly carrying A or indirectly indicating A.

In some embodiments, terms such as "in response to...", "in response to determining...", "in a case of...", "when...", "if...", etc., may be used interchangeably.

In some embodiments, terms such as "greater than", "greater than or equal to", "not less than", "more than", "more than or equal to", "not fewer than", "higher than", "higher than or equal to", "not lower than", "above", etc., may be used interchangeably; and terms such as "less than", "less than or equal to", "not greater than", "fewer than", "fewer than or equal to", "not more than", "lower than", "lower than or equal to", "not higher than", "below", etc., may be used interchangeably.

In some embodiments, obtaining data, information, etc., may comply with the laws and regulations of the country where the obtainment takes place.

In some embodiments, data, information, etc., may be obtained with the user's consent.

In addition, each element, each row, or each column in tables of the embodiments of the present disclosure may be implemented as an independent embodiment, and any combination of any elements, any rows, or any columns may also be implemented as an independent embodiment.

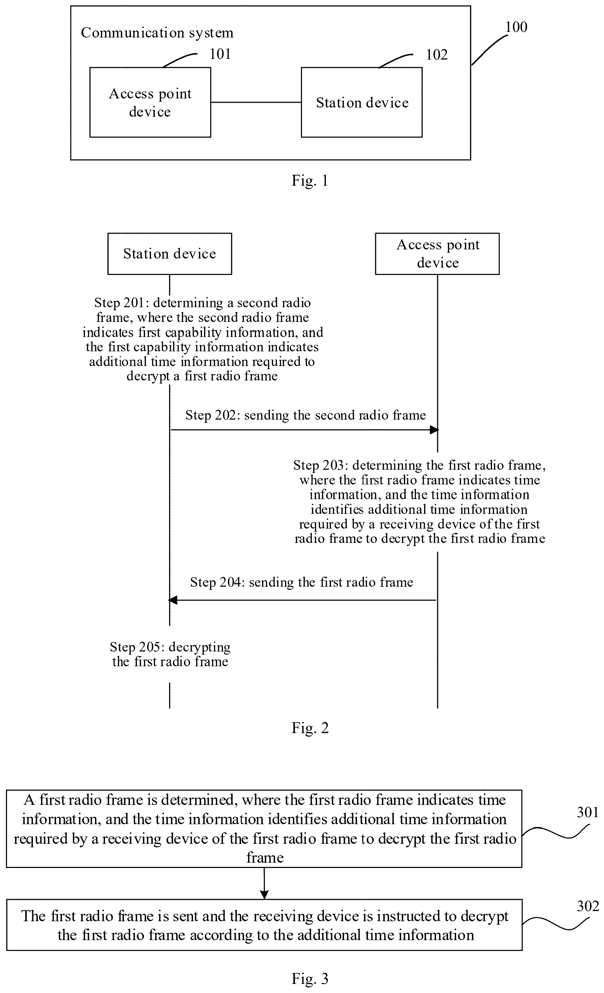

Fig. 1 is a schematic architecture diagram of a communication system according to an embodiment of the present disclosure.

As shown in Fig. 1, a communication system 100 includes an access point device 101 and a station device 102.

In some embodiments, the access point device (AP) 101 is, for example, a device with a wireless-to-wired Bridging function, and the AP is responsible for extending services provided by a wired network to a wireless network. Optionally, the access point device may also be a multi-link access point device, that is, an access point device that supports a multi-link communication function.

In some embodiments, the station device (STA) 102 is, for example, an electronic device with a wireless network access function, and provides a frame delivery service to enable information to be delivered. Optionally, the station device may also be a multi-link station device, that is, a station device supporting a multi-link communication function.

Optionally, in the embodiments of the present disclosure, a determining end of a first radio frame may be the access point device 101, and a receiving device of the first radio frame may be the station device 102.

It may be understood that the communication system described in the embodiments of the present disclosure is for more clearly explaining the technical scheme of the embodiments of the present disclosure, and does not constitute a limitation on the technical scheme proposed in the embodiments of the present disclosure. It is known by those ordinary skilled in the related art that with the evolution of the system architecture and the emergence of new business scenarios, the technical scheme proposed in the embodiments of the present disclosure is also applicable to similar technical problems.

Fig. 2 is a schematic interaction diagram of a data transmission method according to an embodiment of the present disclosure. As shown in Fig. 2, the data transmission method according to the embodiment of the present disclosure includes the following steps.

In step 201, a station device determines a second radio frame, the second radio frame indicates first capability information, and the first capability information indicates additional time information required to decrypt a first radio frame.

In some embodiments, the second radio frame may be a probe request frame or an association request frame.

In the process of data transmission, some data frames (such as a block acknowledge (ACK) request frame ((BAR) frame), a trigger frame and other control frames) may contain sensitive information of the station device, such as sequence number (SN) information of the station device itself, SN numbers of the data frames to start transmission, etc. If such sensitive information is maliciously tampered with by an attacker, a receiver of the data frame may be unable to feed back preparatory reception information of the data frame, etc. Therefore, the data frame containing sensitive information may be encrypted and transmitted, and the transmission security of the data frame may be improved. However, when the data frame containing sensitive information is encrypted and transmitted, the receiver of the encrypted data frame also needs more time (that is, an additional duration for decryption) to decrypt the encrypted data frame, and after the decryption is completed, the receiver may respond to the functional information of the data frame itself, for example, feed back the first radio frame and determine the preparatory reception status information for the first radio frame.

In the embodiments of the present disclosure, the station device may report the duration required by itself to decrypt the encrypted data frame. When the access point device sends the encrypted data frame to the station device, the corresponding additional time information is provided in the encrypted data frame, so that the station device may reserve the additional duration corresponding to the additional time information according to the additional time information in the received encrypted data frame, and decrypt the received encrypted data frame within the additional duration, so as to achieve the safe transmission of the encrypted data frame without affecting the functional information of the encrypted data frame itself.

Optionally, the additional time information may include an additional duration required by the station device to decrypt the first radio frame (i.e., the encrypted data frame sent by the access point device), etc.

For example, in a case that the first radio frame is the encrypted data frame, such as an encrypted BAR frame and an encrypted trigger frame, and the additional duration required by the station device to decrypt the first radio frame is 8 microseconds (µs), compared with an unencrypted data frame, such as an unencrypted trigger frame and an unencrypted BAR frame, the 8 µs may be directly used as additional time information in the second radio frame.

Optionally, a parameter value corresponding to the additional duration may be used as the additional time information. For example, a parameter value "00" may indicate that the additional duration required by the station device to decrypt the first radio frame is 8 µs; a parameter value "01" indicates that the additional duration required by the station device to decrypt the first radio frame is 16 µs; a parameter value "10" indicates that the additional duration required by the station device to decrypt the first radio frame is 24 µs; a parameter value "11" indicates that the additional duration required by the station device to decrypt the first radio frame is 32 µs. Then, in the above example, the additional time information may be "00".

In some embodiments, the second radio frame includes ultra-high reliability (UHR) capability information element, and the UHR capability information element includes a first capability identification bit and a second duration identification bit; the first capability identification bit identifies whether the station device supports a first capability, and the first capability includes decrypting the first radio frame; and the second duration identification bit identifies the additional duration required by the station device to decrypt the first radio frame.

In the above embodiments, the UHR capability information element of the second radio frame carries the first capability identification bit and the second duration identification bit. The first capability identification bit identifies whether the station device supports decrypting the first radio frame, and the second duration identification bit identifies the additional duration required by the station device to decrypt the first radio frame, thus accurately indicating relevant information of the station device decrypting the first radio frame. Moreover, in the second radio frame, it is identified whether the first capability is supported and the specific additional duration is identified by in a representation form of identification bit, so that the amount of transmission data required in the transmission process of the second radio frame may be reduced.

In some embodiments, the first capability identification bit is set to a first parameter value, and it is indicated that the receiving device supports the first capability.

As an example, one bit in a reserved bit of the second radio frame may be used as an additional processing duration bit, and the first capability identification bit may be represented by the additional processing duration bit. For example, when the additional processing duration bit is set to the first parameter value (such as "0"), it is indicated that the receiving device supports the first capability, that is, the receiving device may decrypt the first radio frame. When the additional processing duration bit is set to a second parameter value (such as "1"), it is indicated that the receiving device does not support the first capability, that is, the receiving device cannot decrypt the first radio frame.

In the above embodiments, the first capability identification bit is provided in the second radio frame and it is indicated that the station device supports the first capability when the first capability identification bit is set to the first parameter value, it is possible to accurately know whether the station device supports the first capability. Moreover, in the second radio frame, it is identified whether the first capability is supported in the representation form of identification bit, the amount of transmission data required in the transmission process of the second radio frame may be reduced.

In some embodiments, the second duration identification bit is carried in a medium access control (MAC) capability field of the UHR capability information element, and the second duration identification bit is set to different parameter values, to indicate that different additional durations are required by the station device to decrypt the first radio frame.

As an example, at least two bits may be provided in the MAC capability field, and the additional duration required by the station device to decrypt the first radio frame may be indicated through the two bits.

Specifically, when the parameter value of the two bits is set to "00", it is indicated that the additional duration required by the station device to decrypt the first radio frame is 8 µs; when the parameter value of the two bits is set to "01", it is indicated that the additional duration required by the station device to decrypt the first radio frame is 16 µs; when the parameter value of the two bits is set to "10", it is indicated that the additional duration required by the station device to decrypt the first radio frame is 24 µs; when the parameter value of the two bits is set to "11", the additional duration required by the station device to decrypt the first radio frame is 32 µs.

In the above embodiments, the MAC capability field is provided in the UHR capability information element of the second radio frame, the second duration identification bit is provided in the MAC capability field, and the second duration identification bit is set to different parameter values to indicate the additional duration required by the station device to decrypt the first radio frame, so that the additional duration required by the station device to decrypt the first radio frame may be indicated accurately. Moreover, the specific additional duration is identified in the representation form of identification bit, and thus the amount of transmission data required in the transmission process of the second radio frame may be reduced.

In some embodiments, in a case that the station device is affiliated to a multi-link station device, the first capability information is MLD level information.

Optionally, the station device may support multi-link communication, that is, the station device is affiliated to the multi-link station device, and correspondingly, the first capability information of the station device may be the MLD level information, indicating that with the multi-link station device, the first capability information corresponding to each station device is the same, that is, each station device supports or does not support the first capability, and in a case that each station device supports the first capability, the additional duration required by each station device to decrypt the first radio frame is the same.

For example, in a case that station devices STA1 and STA2 are both affiliated to a same multi-link station device (non-access point multi-link device, that is, non-AP MLD), both STA1 and STA2 support the first capability, and the additional durations required by both STA1 and STA2 to decrypt the first radio frame are the same.

In the above embodiments, when the station device is affiliated to the multi-link station device, the first capability information is the MLD level information, and may simultaneously identify the first capability information corresponding to each station device affiliated to the same multi-link station device.

In step 202, the station device sends the second radio frame to the access point device.

Optionally, the station device may request to establish association with the station device by sending the second radio frame to the access point device.

For example, in a case that the second radio frame is a probe request frame, the association between the station device and the access point device may be established when the access point device sends a probe response frame to the station device; and in a case that the second radio frame is an association request frame, the association between the station device and the access point device may be established when the access point device sends an association response frame to the station device.

In step 203, the access point device determines the first radio frame, where the first radio frame indicates time information, and the time information identifies additional time information required by a receiving device of the first radio frame to decrypt the first radio frame.

The additional time information may include the additional duration required by the station device to decrypt the first radio frame, etc.

For example, in a case that the additional duration required by the station device to decrypt the first radio frame is 8 µs, the set additional time information may be 8 µs.

Optionally, the access point device supports multi-link communication, that is, the access point device may be affiliated to a multi-link access point device, and the time information may be MLD level information in the first radio frame determined by the access point device, which indicates that the corresponding time information is consistent under the link between the access point device and each station device that has established association with the access point device.

For example, in a case that access point device AP1 is affiliated to an access point multi-link device (AP MLD), the station devices associated with AP1 include STA1 and STA2, the link established between AP1 and STA1 is link1, and the link established between AP1 and STA2 is link2, the time information in the first radio frame determined by AP1 is at the MLD level, and the additional time information of the time information under link1 and link2 is the same, that is, the additional time information indicated by the time information in the first radio frame.

In some embodiments, the time information includes: time information reported by the station device; or time information having a longest corresponding duration among time information reported by a plurality of the station devices.

In case of one station device, the time information reported by the station device may be directly taken as the time information in the first radio frame, so as to instruct the station device to reserve the additional duration required to decrypt the first radio frame, and decrypt the received first radio frame in the additional duration.

In case of multiple station devices, the capability of each station device to decrypt the first radio frame may be different. In order to enable each station device to reserve the additional duration required to decrypt the first radio frame, and to decrypt the received first radio frame, in the embodiments of the present disclosure, the time information having the longest corresponding duration among the time information reported by the multiple station devices may be taken as the time information in the first radio frame.

In the above embodiments, the time information in the first radio frame may be determined according to different capabilities of different station devices to decrypt the first radio frame, so as to ensure that each station device may reserve the additional time information required to decrypt the first radio frame after receiving the first radio frame, and decrypt the received first radio frame, thus realizing successful decryption of the first radio frame.

In some embodiments, the first radio frame includes a first duration identification bit, and the first duration identification bit identifies an additional duration required by the station device to decrypt the first radio frame. The additional duration includes: the additional duration required by the station device to decrypt the first radio frame; or a longest additional duration among the additional durations required by a plurality of the station devices to decrypt the first radio frame.

As mentioned above, the time information reported by the station device includes the additional duration required by the station device to decrypt the first radio frame, and it is necessary to determine the time information in the first radio frame in combination with different capabilities of different station devices to decrypt the first radio frame. In the above embodiments, the specific duration of the time information in the first radio frame may be determined according to the additional duration required by the station device to decrypt the first radio frame in combination with different capabilities of different station devices to decrypt the first radio frame, so as to ensure that after each station device receives the first radio frame, each station device may reserve the additional duration required to decrypt the first radio frame, and decrypt the received first radio frame, thus realizing successful decryption of the first radio frame.

In some embodiments, in case of one station device, the first radio frame is a unicast control frame; and in case of at least two station devices, the first radio frame is a broadcast control frame.

In case of one station device, the first radio frame may be directly sent to the station device, that is, the first radio frame may be sent to one station device by one access point device in a one-to-one communication mode, i.e., a unicast frame. That is, the first radio frame may be the unicast control frame. For example, the first radio frame may be a block acknowledgement (ACK) request frame (BAR frame).

In cases of at least two station devices, in order to enable each station device to receive the first radio frame in time, a "one-to-many" communication mode may be adopted, i.e., a broadcast frame or a multicast frame, and the first radio frame may be sent to at least two station devices by one access point device. That is, the first radio frame may be the broadcast control frame. For example, the first radio frame may be a trigger frame.

In the above embodiments, the transmission mode and format of the first radio frame may be selected according to the number of station devices, so as to realize the timely transmission of the first radio frame.

In some embodiments, when the first radio frame is a unicast control frame, time information is appended after a frame check sequence (FCS) field of the unicast control frame to obtain the first radio frame; and when the first radio frame is a broadcast control frame, time information is appended after a common information (common info) field of the broadcast control frame to obtain the first radio frame.

In this implementation, according to different formats of the control frame, the time information may be appended at a tail of the control frame to obtain the first radio frame.

Specifically, when the control frame is the unicast control frame and a tail field of the unicast control frame is the FCS field, the time information may be appended after the FCS field to obtain the first radio frame. When the control frame is the broadcast control frame and a tail field of the broadcast control frame is the common info field, the time information may be appended after the common info field to obtain the first radio frame.

In the above embodiments, the first radio frame is obtained by appending the time information at the tail of the control frame, and the time information may be provided without affecting the functional information of the control frame itself, so as to ensure that after receiving the first radio frame, each station device may reserve the additional time information required to decrypt the first radio frame, and may decrypt the first radio frame. Moreover, it is also convenient to extract the time information from the first radio frame, and then parse the fields except the time information in the first radio frame within the additional duration reserved according to the time information, so as to correctly respond to the first radio frame.

In some embodiments, in a case that the first radio frame carries at least one of high efficiency information, extremely high throughput (EHT) information and ultra-high reliability (UHR) information, the time information is not indicated in the first radio frame.

When the first radio frame carries the at least one of the HE information, the EHT information and the UHR information, it represents that the first radio frame does not include sensitive information, and then the time information may not be appended in the first radio frame.

In the above embodiments, when the first radio frame carries the at least one of the HE information, the EHT information and the UHR information, the time information is not appended in the first radio frame, thus reducing the amount of transmission data required in the data transmission process.

In step 204, the access point device sends the first radio frame to a station device associated with the access point device, and instructs the station device to decrypt the first radio frame according to the additional time information.

Optionally, the access point device sends the first radio frame to the station device associated with the access point device, and may specifically instruct the station device to decrypt the first radio frame in the additional duration indicated by the first radio frame.

In the above embodiments, the access point device determines the first radio frame, sends the first radio frame to the station device associated with the access point device, and instructs the station device to decrypt the first radio frame, thus improving the transmission security of the sensitive information in the first radio frame without affecting the functional information of the first radio frame itself.

In step 205, the station device decrypts the first radio frame.

Optionally, the station device may obtain the additional time information according to the position information of the time information in the first radio frame, and decrypt the first radio frame in the additional duration corresponding to the additional time information.

In the above embodiments, after the station device receives the first radio frame, the transmission security of the sensitive information in the first radio frame may be improved without affecting the functional information of the first radio frame itself.

The data transmission method according to the embodiments of the present disclosure may include at least one of steps 201 to 205. For example, step 203 or step 204 may be implemented as an independent embodiment, step 201+step 202 may be implemented as an independent embodiment, step 201+step 202+step 203 may be implemented as an independent embodiment, step 201+step 202+step 203+step 204 may be implemented as an independent embodiment, and step 201+step 202+step 203+step 204+step 205 may be implemented as an independent embodiment, however the present disclosure is not limited to this.

In some embodiments, when the station device supports the first capability, the steps of determining the first capability identification bit and the second duration identification bit in step 201 may be performed in a reverse order or simultaneously.

In some embodiments, step 205 is optional, and this step may be omitted or replaced in different embodiments.

In some embodiments, reference may be made to other optional implementations described before or after the descriptions corresponding to Fig. 2.

In this way, the station device reports the duration required by itself to decrypt the encrypted data frame. When the access point device sends the encrypted data frame to the station device, the corresponding additional time information is provided in the encrypted data frame, so that the station device may reserve the additional duration corresponding to the additional time information after receiving the encrypted data frame, and decrypt the encrypted data frame in the additional duration, thus realizing the safe transmission of the encrypted data frame without affecting the functional information of the encrypted data frame itself. Embodiments of the present disclosure provide a mechanism for improving data transmission security.

In some embodiments, the terms "frame" and "radio frame" may be used interchangeably.

In some embodiments, the terms "obtain", "acquire", "gain", "receive", "transmit", "bidirectionally transmit", "transmit and/or receive" may be used interchangeably, which may be interpreted as receiving from another entity, obtaining from a protocol, obtaining from a higher layer, obtaining through self-processing, self-implementation, and other meanings.

In some embodiments, the terms "send", "emit", "report", "issue", "transmit", "bidirectionally transmit", "transmit and/or receive" may be used interchangeably.

In some embodiments, the terms "certain", "preset", "predetermined", "set", "indicated", "some", "arbitrary" and "first" may be used interchangeably, and the features "specific A", "preset A", "predetermined A", "set A", "indicated A", "some A", "arbitrary A" and "first A" may be interpreted as an A pre-specified in an agreement, may be interpreted as an A obtained through setting, configuration or indication, or may be interpreted as a specific A, a certain A, an arbitrary A or a first A.

In some embodiments, the judgment or determination may be made by a value (0 or 1) represented by 1 bit, a true or false value (Boolean value) represented by true or false, or numerical comparison (for example, comparison with a predetermined value), but the present disclosure is not limited to this.

Fig. 3 is a flowchart of a data transmission method according to an embodiment of the present disclosure. As shown in Fig. 3A, an embodiment of the present disclosure relates to a data transmission method. Optionally, the method may be performed by an access point device.

As shown in Fig. 3, the method includes the following steps.

In step 301, a first radio frame is determined, where the first radio frame indicates time information, and the time information identifies additional time information required by a receiving device of the first radio frame to decrypt the first radio frame.

In some embodiments, for the optional implementations of step 301, reference may be made to the optional implementations of step 203 in Fig. 2 and other related parts of the embodiment involved in Fig. 2, which are not repeated here.

Optionally, the access point device may determine the first radio frame after receiving a second radio frame sent by a station device.

In some embodiments, for the optional implementations of determining the second radio frame, reference may be made to the optional implementations of step 201 in Fig. 2 and other related parts of the embodiment involved in Fig. 2, which are not repeated here.

In step 302, the first radio frame is sent and the receiving device is instructed to decrypt the first radio frame according to the additional time information.

In some embodiments, for the optional implementations of step 302, reference may be made to the optional implementations of step 204 in Fig. 2 and other related parts of the embodiment involved in Fig. 2, which are not repeated here.

Optionally, for the optional implementations of the receiving device decrypting the first radio frame, reference may be made to the optional implementations of step 205 in Fig. 2 and other related parts in the embodiment involved in Fig. 2, which are not repeated here.

The data transmission method according to the embodiment of the present disclosure may include at least one of steps 301 to 302. For example, step 301 may be implemented as an independent embodiment, and step 301+step 302 may be implemented as an independent embodiment.

In some embodiments, referring to the optional implementations of step 201, when the receiving device supports the first capability, the steps of determining the first capability identification bit and the second duration identification bit in step 301 may be performed in a reverse order or simultaneously.

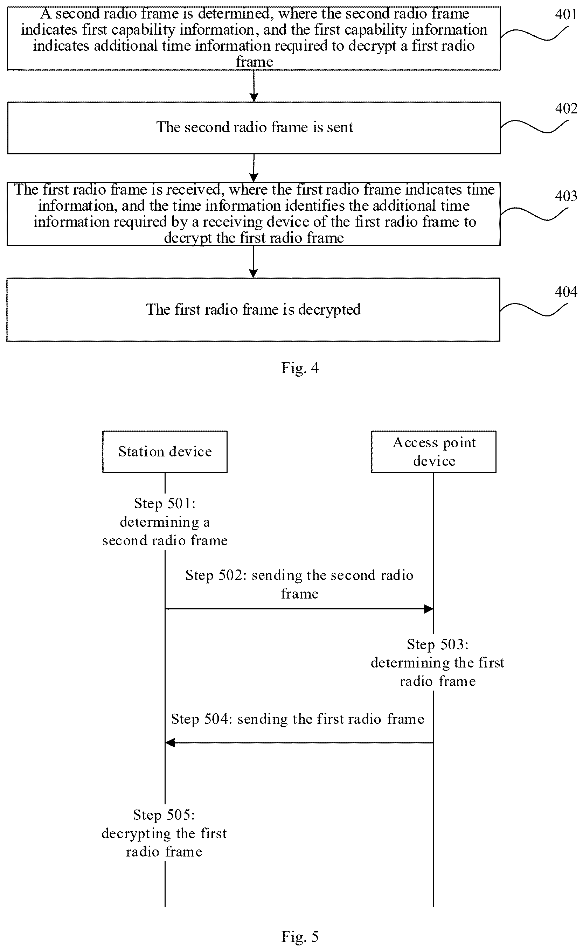

Fig. 4 is a flowchart of a data transmission method according to an embodiment of the present disclosure. As shown in Fig. 4, an embodiment of the present disclosure relates to a data transmission method. Optionally, the method may be performed by a station device.

As shown in Fig. 4, the method includes the following steps.

In step 401, a second radio frame is determined, where the second radio frame indicates first capability information, and the first capability information indicates additional time information required to decrypt a first radio frame.

In some embodiments, for the optional implementations of step 402, reference may be made to the optional implementations of step 201 in Fig. 2 and other related parts of the embodiment involved in Fig. 2, which are not repeated here.

In step 402, the second radio frame is sent.

In some embodiments, for the optional implementations of step 402, reference may be made to the optional implementations of step 202 in Fig. 2 and other related parts of the embodiment involved in Fig. 2, which are not repeated here.

In step 403, the first radio frame is received, where the first radio frame indicates time information, and the time information identifies the additional time information required by a receiving device of the first radio frame to decrypt the first radio frame.

In some embodiments, for the optional implementations of step 403, reference may be made to the optional implementations of step 204 in Fig. 2 and step 302 in Fig. 3, and other related parts in the embodiment involved in Fig. 2 and the embodiment involved in Fig. 3, which are not repeated here.

Optionally, the first radio frame may be determined by an access point device. For the optional implementations of determining the first radio frame, reference may be made to the optional implementations of step 203 in Fig. 2 and step 301 in Fig. 3, and other related parts in the embodiment involved in Fig. 2 and the embodiment involved in Fig. 3, which are not repeated here.

In step 404, the first radio frame is decrypted.

In some embodiments, for the optional implementations of step 404, reference may be made to the optional implementations of step 205 in Fig. 2 and other related parts of the embodiment involved in Fig. 2, which are not repeated here.

The data transmission method according to the embodiment of the present disclosure may include at least one of step 401 to step 404. For example, step 403 may be implemented as an independent embodiment, step 401+step 402+step 403 may be implemented as an independent embodiment, and step 401+step 402+step 403+step 404 may be implemented as an independent embodiment, but the present disclosure is not limited to this.

In some embodiments, when the station device supports the first capability, the steps of determining the first capability identification bit and the second duration identification bit in step 401 may be performed in a reverse order or simultaneously.

In some embodiments, step 404 is optional, and this step may be omitted or replaced in different embodiments.

Fig. 5 is a schematic interaction diagram of a data transmission method according to an embodiment of the present disclosure. As shown in Fig. 5, an embodiment of the present disclosure relates to a data transmission method, and the method includes the following steps.

In step 501, a station device determines a second radio frame, where the second radio frame indicates first capability information, and the first capability information indicates additional time information required to decrypt a first radio frame.

For the optional implementations of step 501, reference may be made to the optional implementations of step 201 in Fig. 2 and step 401 in Fig. 4, and other related parts in the embodiment involved in Fig. 2 and the embodiment involved in Fig. 4, which are not repeated here.

In step 502, the station device sends the second radio frame to an access point device.

For the optional implementations of step 502, reference may be made to the optional implementations of step 202 in Fig. 2 and step 402 in Fig. 4, and other related parts in the embodiment involved in Fig. 2 and the embodiment involved in Fig. 4, which are not repeated here.

In step 503, the access point device determines the first radio frame, where the first radio frame indicates time information, and the time information identifies additional time information required by a receiving device of the first radio frame to decrypt the first radio frame.

For the optional implementations of step 503, reference may be made to the optional implementations of step 203 in Fig. 2 and step 301 in Fig. 3, and other related parts in the embodiment involved in Fig. 2 and the embodiment involved in Fig. 3, which are not repeated here.

In step 504, the access point device sends the first radio frame to the station device.

For the optional implementations of step 504, reference may be made to the optional implementations of step 204 in Fig. 2 and step 302 in Fig. 3, and other related parts in the embodiment involved in Fig. 2 and the embodiment involved in Fig. 3, which are not repeated here.

In step 505, the station device decrypts the first radio frame according to the additional time information in the duration indicated by the additional time information.

For the optional implementations of step 505, reference may be made to the optional implementations of step 205 in Fig. 2 and step 404 in Fig. 4, and other related parts in the embodiment involved in Fig. 2 and the embodiment involved in Fig. 4, which are not repeated here.

The data transmission method according to the embodiment of the present disclosure may include at least one of step 501 to step 505. For example, step 503 or step 504 may be implemented as an independent embodiment, step 501+step 502 may be implemented as an independent embodiment, step 501+step 502+step 503 may be implemented as an independent embodiment, step 501+step 502+step 503+step 504 may be implemented as an independent embodiment, and step 501+step 502+step 503+step 504+step 505 may be implemented as an independent embodiment, however the present disclosure is not limited to this.

In some embodiments, when the station device supports the first capability, the steps of determining the first capability identification bit and the second duration identification bit in step 501 may be performed in a reverse order or simultaneously.

In some embodiments, step 505 is optional, and this step may be omitted or replaced in different embodiments.

Embodiments of the present disclosure also provide a device for implementing any of the above data transmission methods, for example, a data transmission device, which includes units or modules for implementing the steps performed by the access point device in any of the above methods. For another example, another data transmission device is also proposed, which includes units or modules for implementing the steps performed by the station device in any of the above methods.

It should be understood that the division of units or modules in the above device is only a division of logical functions. In actual implementation, they may be fully or partially integrated into one physical entity, or may be physically separated. In addition, the units or modules in the device may be implemented in the form of a processor calling software. For example, the device includes a processor, the processor is connected to a memory, the memory stores instructions, and the processor calls the instructions stored in the memory to implement any one of the above methods or the functions of the units or modules of the above device. The processor is, for example, a general-purpose processor, such as a central processing unit (CPU) or a microprocessor, and the memory is a memory inside the device or a memory outside the device. Alternatively, the units or modules in the device may be implemented in the form of a hardware circuit. The functions of some or all units or modules may be implemented by designing the hardware circuit. The hardware circuit may be understood as one or more processors. For example, in an implementation, the hardware circuit is an application-specific integrated circuit (ASIC), and the functions of some or all units or modules above are implemented by designing a logical relationship of components in the circuit. As another example, in another implementation, the hardware circuit may be implemented by a programmable logic device (PLD). Taking a field programmable gate array (FPGA) as an example, it may include a large number of logic gate circuits, and a connection relationship between the logic gate circuits is configured through configuration files, thereby implementing the functions of some or all units or modules above. All units or modules of the above device may be fully implemented in the form of the processor calling software, or fully implemented in the form of the hardware circuit, or partially implemented in the form of the processor calling software and partially implemented in the form of the hardware circuit.

In the embodiments of the present disclosure, a processor is a circuit with a signal processing capability. In an implementation, the processor may be a circuit with a capability to read and run instructions, such as a central processing unit (CPU), a microprocessor, a graphics processing unit (GPU) (which may be understood as a microprocessor), or a digital signal processor (DSP), etc. In another implementation, the processor may implement certain functions through a logical relationship of a hardware circuit. The logical relationship of the hardware circuit is fixed or reconfigurable. For example, the processor is a hardware circuit implemented by an application-specific integrated circuit (ASIC) or a programmable logic device (PLD), such as a field-programmable gate array (FPGA). In a reconfigurable hardware circuit, a process of the processor loading configuration files to implement hardware circuit configuration may be understood as a process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

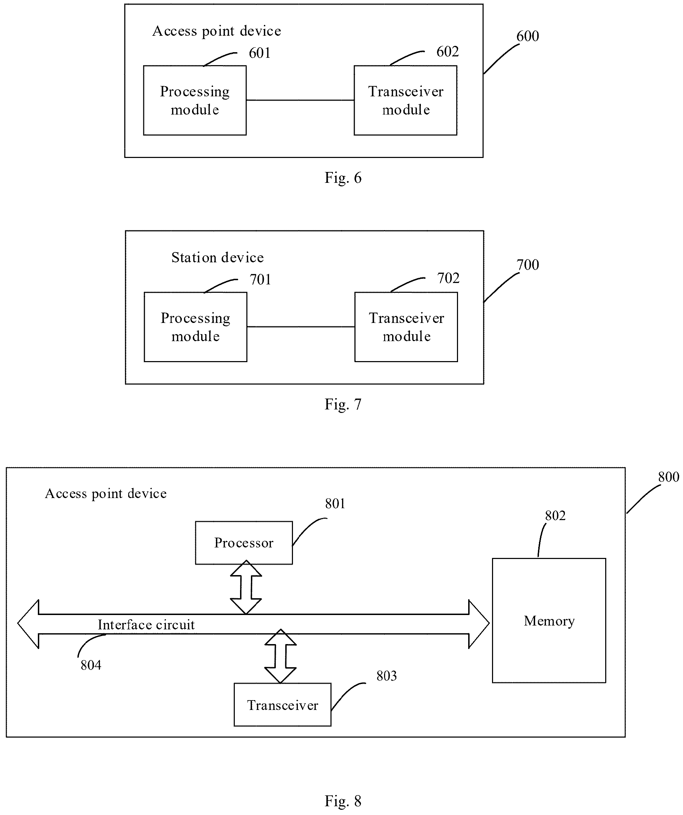

Fig. 6 is a schematic block diagram of an access point device proposed by an embodiment of the present disclosure. As shown in Fig. 6, an access point device 600 may include at least one of a processing module 601 and a transceiver module 602.

In some embodiments, the processing module 601 is used to determine a first radio frame, where the first radio frame indicates time information, and the time information identifies additional time information required by a receiving device of the first radio frame to decrypt the first radio frame.

Optionally, the transceiver module 602 is used to perform at least one of the communication (sending and/or receiving) steps (e.g., step 202, step 204, step 302, step 402, step 403, step 502, step 504, but not limited to this) performed by the access point device 101 in any of the above methods, which are not repeated here.

Optionally, the processing module is used to perform at least one of other steps (e.g., step 203, step 301, step 503, but not limited to this) performed by the access point device 101 in any of the above methods, which are not repeated here.

Fig. 7 is a schematic block diagram of a station device proposed by an embodiment of the present disclosure. As shown in Fig. 7, a station device 700 may include at least one of a processing module 701 and a transceiver module 702.

In some embodiments, the processing module 701 is configured to determine a second radio frame, where the second radio frame indicates second identification information, and the second identification information identifies confirmation information for a first radio frame.

Optionally, the transceiver module 702 is used to perform at least one of the communication (sending and/or receiving) steps (e.g., step 202, step 204, step 302, step 402, step 403, step 502, step 504, but not limited to this) performed by the multi-link station device 102 in any of the above methods, which are not repeated here.

Optionally, the processing module is used to perform at least one of other steps (e.g., step 203, step 205, step 401, step 404, step 503, step 505, but not limited to this) performed by the station device 102 in any of the above methods, which are not repeated here.

In some embodiments, the transceiver module may include a sending module and/or a receiving module, which may be separated or integrated. Optionally, the transceiver module may be interchanged with a transceiver.

In some embodiments, the processing module may be one module or include multiple sub-modules. Optionally, the multiple sub-modules respectively perform all or part of the steps required to be performed by the processing module. Optionally, the processing module may be interchanged with a processor.

Fig. 8 is a schematic block diagram of an access point device 800 proposed by an embodiment of the present disclosure. The access point device 800 may be a network device (e.g., an access network device, a core network device, etc.), a terminal (e.g., user equipment, etc.), a chip, chip system, or processor that supports the network device to realize any of the above methods, or a chip, chip system, or processor that supports the terminal to realize any of the above methods. The access point device 800 may be used to perform the methods described in the above method embodiments, and for details, reference may be made to the descriptions in the above method embodiments.

As shown in Fig. 8, the access point device 800 includes one or more processors 801. The processor 801 may be a general-purpose processor or a special-purpose processor, for example, a baseband processor or a central processor. The baseband processor may be used to process communication protocols and communication data, and the central processor may be used to control communication devices (such as base stations, baseband chips, terminals, terminal chips, DUs or CUs, etc.), execute programs, and process program data. The access point device 800 is used to perform any of the above methods.

In some embodiments, the access point device 800 further includes one or more memories 802 for storing instructions. Optionally, all or part of the memories 802 may be located outside the access point device 800.

In some embodiments, the access point device 800 further includes one or more transceivers 803. When the multi-link access point device 800 includes one or more transceivers 803, the transceivers 803 perform at least one of the communication (sending and/or receiving) steps (such as step 202, step 204, step 302, step 402, step 403, step 502, step 504, but not limited to this) in the above methods, and the processor 801 performs at least one of other steps (such as step 203, step 301, step 503, but not limited to this).

In some embodiments, the transceiver may include a receiver and/or a transmitter, which may be separated or integrated. Optionally, the terms transceiver, transceiving unit, transceiving machine, transceiving circuit, etc. may be used interchangeably, and the terms transmitter, transmitting unit, transmitting machine, transmitting circuit, etc. may be used interchangeably, and the terms receiver, receiving unit, receiving machine, receiving circuit, etc. may be used interchangeably.

In some embodiments, the access point device 800 may include one or more interface circuits 804. Optionally, the interface circuit 804 is connected to the memory 802. The interface circuit 804 may be used to receive signals from the memory 802 or other devices, and may be used to send signals to the memory 802 or other devices. For example, the interface circuit 804 may read instructions stored in the memory 802 and send the instructions to the processor 801.

The access point device 800 described in the above embodiment may be a network device or a terminal, but the scope of the multi-link access point device 800 described in the present disclosure is not limited to this, and the structure of the access point device 800 may not be limited by Fig. 8. The communication device may be a stand-alone device or may be part of a large device. For example, the communication device may be: 1) an independent integrated circuit (IC), or a chip, or a chip system or subsystem; 2) a set with one or more ICs, optionally, the above IC set may also include a storage unit for storing data and programs; 3) an ASIC, such as a modem; 4) a module that may be embedded in other devices; 5) a receiver, a terminal, a smart terminal, a cellular phone, a wireless device, a handset, a mobile unit, a vehicle-mounted device, a network device, a cloud device, an artificial intelligence device, etc.; 6) others, etc.

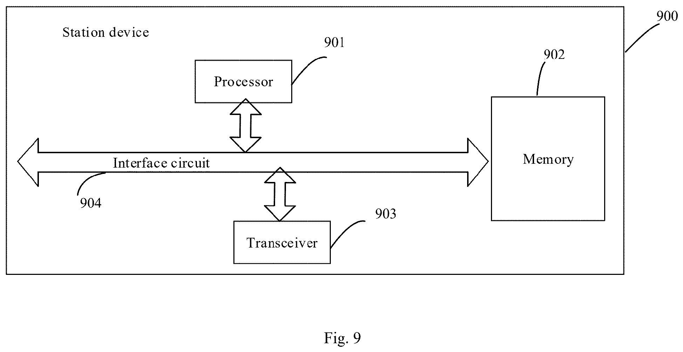

Fig. 9 is a schematic block diagram of a station device 900 proposed by an embodiment of the present disclosure. The station device 900 may be a network device (e.g., an access network device, a core network device, etc.), a terminal (e.g., user equipment, etc.), a chip, chip system, or processor that supports the network device to realize any of the above methods, or a chip, chip system, or processor that supports the terminal to realize any of the above methods. The station device 900 may be used to perform the methods described in the above method embodiments, and for details, reference may be made to the descriptions in the above method embodiments.

As shown in Fig. 9, the station device 900 includes one or more processors 901. The processor 901 may be a general-purpose processor or a special-purpose processor, for example, a baseband processor or a central processor. The baseband processor may be used to process communication protocols and communication data, and the central processor may be used to control communication devices (such as base stations, baseband chips, terminals, terminal chips, DUs or CUs, etc.), execute programs, and process program data. The station device 900 is used to perform any of the above methods.

In some embodiments, the station device 900 also includes one or more memories 902 for storing instructions. Optionally, all or part of the memories 902 may be located outside the station device 900.

In some embodiments, the station device 900 further includes one or more transceivers 903. When the station device 900 includes one or more transceivers 903, the transceivers 903 perform at least one of the communication (sending and/or receiving) steps (such as step 202, step 204, step 302, step 402, step 403, step 502 and step 504, but not limited to this) in the above methods, and the processor 901 performs at least one of other steps (such as step 203, step 205, step 401, step 404, step 503, step 505, but not limited to this).

In some embodiments, the transceiver may include a receiver and/or a transmitter, which may be separated or integrated. Optionally, the terms transceiver, transceiving unit, transceiving machine, transceiving circuit, etc. may be used interchangeably, and the terms transmitter, transmitting unit, transmitting machine, transmitting circuit, etc. may be used interchangeably, and the terms receiver, receiving unit, receiving machine, receiving circuit, etc. may be used interchangeably.

In some embodiments, the station device 900 may include one or more interface circuits 904. Optionally, the interface circuit 904 is connected to the memory 902, and the interface circuit 904 may be used to receive signals from the memory 902 or other devices, and may be used to send signals to the memory 902 or other devices. For example, the interface circuit 904 may read instructions stored in the memory 902 and send the instructions to the processor 901.

The multi-link station device 900 described in the above embodiment may be a network device or a terminal, but the scope of the multi-link station device 900 described in the present disclosure is not limited to this, and the structure of the station device 900 may not be limited by Fig. 9. The communication device may be a stand-alone device or may be part of a large device. For example, the communication device may be: 1) an independent integrated circuit (IC), or a chip, or a chip system or subsystem; 2) a set with one or more ICs, optionally, the above IC set may also include a storage unit for storing data and programs; 3) an ASIC, such as a modem; 4) a module that may be embedded in other devices; 5) a receiver, a terminal, a smart terminal, a cellular phone, a wireless device, a handset, a mobile unit, a vehicle-mounted device, a network device, a cloud device, an artificial intelligence device, etc.; 6) others, etc.

The present disclosure also proposes a storage medium on which instructions are stored, which, when executed on the access point device 800, cause the access point device 800 to perform any of the above methods. When the above instructions are executed on the station device 900, the station device 900 is caused to perform any of the above methods. Optionally, the storage medium is an electronic storage medium. Optionally, the storage medium is a computer-readable storage medium, but it is not limited to this, and it may also be a storage medium readable by other devices. Optionally, the storage medium may be a non-transitory storage medium, but it is not limited to this, and it may also be a transitory storage medium.

The present disclosure also proposes a program product which, when executed by the access point device 800, causes the access point device 800 to perform any of the above methods. The above program product, when executed by the station device 900, causes the station device 900 to perform any of the above methods. Optionally, the program product is a computer program product.

The present disclosure also proposes a computer program which, when run on a computer, causes the computer to perform any of the above methods.

## Claims

1. A data transmission method, performed by an access point device, comprising:
determining a first radio frame, wherein the first radio frame indicates time information, and the time information identifies additional time information required by a receiving device of the first radio frame to decrypt the first radio frame; and
sending the first radio frame.

2. The method according to claim 1, wherein the time information comprises:
time information reported by the receiving device; or
time information having a longest corresponding duration among time information reported by a plurality of the receiving devices.

3. The method according to claim 1 or 2, wherein the first radio frame comprises a first duration identification bit, the first duration identification bit identifies an additional duration required by the receiving device to decrypt the first radio frame, and the additional duration comprises:
the additional duration required by the receiving device to decrypt the first radio frame; or
a longest additional duration among the additional durations required by a plurality of the receiving devices to decrypt the first radio frame.

4. The method according to claim 1 or 2, wherein before determining the first radio frame, the method further comprises:
receiving a second radio frame sent by the receiving device, wherein the second radio frame indicates first capability information of the receiving device, and the first capability information indicates the additional time information required by the receiving device to decrypt the first radio frame.

5. The method according to claim 4, wherein the second radio frame comprises an ultra-high reliability (UHR) capability information element, and the UHR capability information element comprises a first capability identification bit and a second duration identification bit;
the first capability identification bit identifies whether the receiving device supports a first capability, and the first capability comprises decrypting the first radio frame; and
the second duration identification bit identifies an additional duration required by the receiving device to decrypt the first radio frame.

6. The method according to claim 5, wherein in a case that the first capability identification bit is set to a first parameter value, it is indicated that the receiving device supports the first capability.

7. The method according to claim 5, wherein the second duration identification bit is carried in a medium access control (MAC) capability field of the UHR capability information element; and
the second duration identification bit is set to different parameter values, to indicate that different additional durations are required by the receiving device to decrypt the first radio frame.

8. The method according to claim 4, wherein the first capability information is multi-link device (MLD) level information in a case that the receiving device is affiliated to a multi-link device.

9. The method according to claim 4, wherein determining the first radio frame comprises:
appending the time information after a frame check sequence (FCS) field of a unicast control frame to obtain the first radio frame, in a case that the first radio frame is the unicast control frame; and
appending the time information after a common information (common info) field of a broadcast control frame to obtain the first radio frame, in a case that the first radio frame is the broadcast control frame.

10. The method according to claim 9, wherein,
the first radio frame is the unicast control frame in case of one receiving device; and
the first radio frame is the broadcast control frame in case of at least two receiving devices.

11. The method according to claim 1, wherein the time information is not indicated in the first radio frame in a case that the first radio frame carries at least one of high efficiency (HE) information, extremely high throughput (EHT) information or UHR information.

12. The method according to claim 1, wherein sending the first radio frame comprises:
sending the first radio frame and instructing the receiving device to decrypt the first radio frame according to the additional time information.

13. A data transmission method, comprising:
receiving a first radio frame, wherein the first radio frame indicates time information, and the time information identifies additional time information required by a receiving device of the first radio frame to decrypt the first radio frame.

14. The method according to claim 13, wherein the time information comprises:
time information reported by the receiving device; or
time information having a longest corresponding duration among time information reported by a plurality of the receiving devices.

15. The method according to claim 13 or 14, wherein the first radio frame comprises a first duration identification bit, the first duration identification bit identifies an additional duration required by the receiving device to decrypt the first radio frame, and the additional duration comprises:
the additional duration required by the receiving device to decrypt the first radio frame; or
a longest additional duration among the additional durations required by a plurality of the receiving devices to decrypt the first radio frame.

16. The method according to claim 13 or 14, wherein before receiving the first radio frame, the method further comprises:
determining a second radio frame, wherein the second radio frame indicates first capability information, and the first capability information indicates the additional time information required to decrypt the first radio frame; and
sending the second radio frame.

17. The method according to claim 16, wherein the second radio frame comprises an ultra-high reliability (UHR) capability information element, and the UHR capability information element comprises a first capability identification bit and a second duration identification bit;
the first capability identification bit identifies whether the first capability is supported, and the first capability comprises decrypting the first radio frame; and
the second duration identification bit identifies an additional duration required to decrypt the first radio frame.

18. The method according to claim 17, wherein in a case that the first capability identification bit is set to a first parameter value, it is indicated that the first capability is supported.

19. The method according to claim 17, wherein the second duration identification bit is carried in a medium access control (MAC) capability field of the UHR capability information element; and
the second duration identification bit is set to different parameter values, to indicate that different additional durations are required to decrypt the first radio frame.

20. The method according to claim 16, wherein the first capability information is multi-link device (MLD) level information in a case that the receiving device is affiliated to a multi-link device.

21. The method according to claim 13, wherein,
in a case that the first radio frame is a unicast control frame, the time information is appended after a frame check sequence (FCS) field of the unicast control frame; and
in a case that the first radio frame is a broadcast control frame, the time information is appended after a common information (common info) field of the broadcast control frame.

22. The method according to claim 21, wherein,
the first radio frame is the unicast control frame in case of one receiving device; and
the first radio frame is the broadcast control frame in case of at least two receiving devices.

23. The method according to claim 13, wherein the time information is not indicated in the first radio frame in a case that the first radio frame carries at least one of high efficiency (HE) information, extremely high throughput (EHT) information or UHR information.

24. The method according to claim 13, further comprising:
decrypting the first radio frame according to the additional time information.

25. An access point device, comprising:
a radio frame determining module configured to determine a first radio frame, wherein the first radio frame indicates time information, and the time information identifies additional time information required by a receiving device of the first radio frame to decrypt the first radio frame; and
a radio frame sending module configured to send the first radio frame.

26. A station device, comprising:
a radio frame receiving module configured to receive a first radio frame, wherein the first radio frame indicates time information, and the time information identifies additional time information required by a receiving device of the first radio frame to decrypt the first radio frame.

27. An access point device, comprising:
one or more processors,
wherein the access point device is configured to perform the data transmission method according to any one of claims 1 to 12.

28. A station device, comprising:
one or more processors,
wherein the station device is configured to perform the data transmission method according to any one of claims 13 to 24.

29. A communication system, comprising an access point device and a station device, wherein the access point device is configured to perform the data transmission method according to any one of claims 1 to 12, and the station device is configured to perform the data transmission method according to any one of claims 13 to 24.

30. A storage medium, storing instructions which, when executed on a communication device, cause the communication device to perform the data transmission method according to any one of claims 1 to 12 or the data transmission method according to any one of claims 13 to 24.
